(19) Europäisches Patentamt / European Patent Office / Office européen des brevets

(11) EP 1 631 938 B1

(12) EUROPÄISCHE PATENTSCHRIFT

(45) Veröffentlichungstag und Bekanntmachung des Hinweises auf die Patenterteilung:
05.09.2018 Patentblatt 2018/36

(51) Int Cl.:
$G06T\ 17/05$ (2011.01)     $G06F\ 17/17$ (2006.01)

(21) Anmeldenummer: 04739286.5

(22) Anmeldetag: 21.05.2004

(86) Internationale Anmeldenummer:
PCT/EP2004/005464

(87) Internationale Veröffentlichungsnummer:
WO 2004/109604 (16.12.2004 Gazette 2004/51)

(54) **VERFAHREN ZUR GENERIERUNG EINES DREIDIMENSIONALEN GELÄNDEMODELLS**

METHOD FOR GENERATING A THREE-DIMENSIONAL TERRAIN MODEL

PROCEDE DE PRODUCTION D'UN MODELE TOPOGRAPHIQUE TRIDIMENSIONNEL

(84) Benannte Vertragsstaaten:
AT BE BG CH CY CZ DE DK EE ES FI FR GB GR HU IE IT LI LU MC NL PL PT RO SE SI SK TR

(30) Priorität: 06.06.2003 DE 10325738

(43) Veröffentlichungstag der Anmeldung:
08.03.2006 Patentblatt 2006/10

(73) Patentinhaber: ATLAS ELEKTRONIK GmbH
28309 Bremen (DE)

(72) Erfinder: DUGGE, Peter
26125 Oldenburg (DE)

(74) Vertreter: thyssenkrupp Intellectual Property GmbH
ThyssenKrupp Allee 1
45143 Essen (DE)

(56) Entgegenhaltungen:
WO-A-93/04437     US-A- 5 798 768
US-A1- 2002 035 553

• REIGBER A ET AL: "DEM generation using ERS tandem data: phase unwrapping and quality assessment" EUSAR'98. PROCEEDINGS OF EUROPEAN CONFERENCE ON SYNTHETIC APERTURE RADAR VDE VERLAG GMBH BERLIN, GERMANY, 25. Mai 1998 (1998-05-25), Seiten 245-248, XP008037725 ISBN: 3-8007-2359-X
• KIDNER D ET AL: "What's the point? Interpolation and extrapolation with a regular grid DEM" ONLINE PROCEEDINGS OF IV INTERNATIONAL CONFERENCE ON GEOCOMPUTATION, [Online] 25. Juli 1999 (1999-07-25), XP002302932 FREDERICKSBURG, VA, USA Gefunden im Internet: URL:http://www.geovista.psu.edu/sites/geocomp99/Gc99/082/gc_082.htm> [gefunden am 2004-10-27]

EP 1 631 938 B1

**Beschreibung**

Die Erfindung betrifft ein Verfahren zur Generierung eines dreidimensionalen Geländemodells für eine 3D-Geländedarstellung und -auswertung unter Zuhilfenahme von objektorientierten Vektordaten, die für das Gelände beschreibende Stützpunkte mindestens deren kartographische Lage angebende Positionswerte und deren Höhe oder Tiefen gegenüber einem Bezugsniveau angebende Höhenwerte enthalten.

Zur Generierung von dreidimensionalen Geländemodellen für eine 3D-Geländedarstellung und -auswertung sind verschiedene Verfahren bekannt, die sich alle auf in elektronischer Form vorliegenden Informationen über den geografischen Raum stützen. Bekannte Formen solcher Informationen sind Rasterdaten, objektorientierte Vektordaten sowie Matrixdaten. Rasterdaten enthalten Bildpunktinformationen in einem Raster, objektorientierte Vektordaten enthalten Informationen zu objektspezifischen Eigenschaften, wie etwa die geologische Beschaffenheit des Meeresbodens, und räumliche Informationen zu Objekten, wie etwa die geographischen Koordinaten eines Wracks, in räumlich ungleichmäßig über das Gelände verteilter Form und Matrixdaten enthalten u. a. Informationen zu Geländehöhen oder -tiefen in regelmäßig über das Gelände verteilter Form.

Diese Daten werden durch geeignete Vermessung der Geländeoberfläche bzw. des Meeresboden gewonnen, wobei die Messpunkte so gewählt werden, dass Geländeformen, wie Kuppen, Senken, Rücken, Täler, Bruchkanten, Falllinien, und besondere Objekte, wie Straßen, Gewässer und Gebäude, optimal erfasst werden. Zusätzlich werden auch Objektarten und -eigenschaften erfasst. Die Generierung von Geländemodellen aus solchen Daten erfolgt bei bekannten Verfahren als weitgehend automatischer, menschlich überwachter, interaktiver Prozess, der auch die Qualitätskontrolle der Messdaten mit einbezieht. Dabei werden entweder regelmäßige Modelle, bei denen durch die Daten vorgegebene Stützpunkte gleichmäßig verteilt vorliegen (Matrixdaten) und weitere Modellpunkte durch Interpolation im Raster generiert werden, oder unregelmäßige Modelle erstellt, bei denen die Stützpunkte ungleichmäßig verteilt vorliegen und weitere Modellinformationen z. B. durch Dreiecksvermaschung nach Delauny erstellt werden (Bartelme, Geoinformatik, Springer, Berlin 1995, Seite 117 ff.)

Bei taktischen Systemen, in denen umfangreiche Geländeanalysen durchgeführt werden, werden im allgemeinen regelmäßige Geländemodelle verwendet, die diesen Systemen von extern zugeführt werden. Sollen auf diesen Systemen auch Darstellungen zur Topographie (Straßenverlauf, Lage von Städten etc.) erfolgen, sind hierfür neben dem Geländemodell auch Karten in Form von raster-oder objektorientierten elektronischen Karten in das System einzubringen.

Durch das in US 5798768 A beschriebene Verfahren wird ein zweidimensionales Abbild eines Gebiets der Erdoberfläche erzeugt. Das Verfahren von D1 hat das Ziel "to plot step by step the two-dimensional configuration of a network of curves or lineaments representing the configuration of objects in a zone of an environment or of a field of vector physical quantities in this zone". In die Darstellung wird ein Netz von Kurven gelegt. Dieses Netz repräsentiert die Verteilung von Gegenständen des Gebiets oder die Variation einer physikalischen Größe im Gebiet.

Ein Gitter mit mehreren Gitterfeldern wird über das Gebiet gelegt. Für einige Rasterfelder und einige Kurven ist bekannt, in welcher Orientierung die Kurve dieses Rasterfeld schneidet. In einem ersten Schritt werden Umgebungen um Gitterfelder des Gitters festgelegt. Für jedes Gitterfeld wird festgestellt, ob mindestens eine Kurve dessen Umgebung schneidet. Falls eine Kurve die Umgebung schneidet, so wird eine durchschnittliche Orientierung aller Kurven in dieser Umgebung ermittelt und den Gitterfeldern zugeordnet. Als Ergebnis des ersten Schrittes ist einigen Gitterfeldern jeweils ein Orientierungswert zugeordnet. Im zweiten Schritt wird für diejenigen Gitterfelder, denen im ersten Schritt keinen Orientierungswert erhalten haben, jeweils ein Orientierungswert durch Extrapolation berechnet und dem Gitterfeld zugeordnet. Das Verfahren von US 5798768 A lässt sich erweitern, um ein dreidimensionales Abbild zu erhalten.

Der Erfindung liegt die Aufgabe zugrunde, ein Verfahren zur Generierung eines dreidimensionalen Geländemodells anzugeben, das eine automatische Generierung des Geländemodells aus objektorientierten, elektronischen Vektordaten ohne humane Interaktion ermöglicht.

Die Aufgabe ist erfindungsgemäß durch die Merkmale im Anspruch 1 gelöst.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Das erfindungsgemäße Verfahren hat den Vorteil, dass es durch die Kombination von Extrapolation und gewichteter Interpolation sehr stabil ist, d. h. mit nur objektorientierten Vektorkarten, die unter Berücksichtigung der Visualisierung von Höheninformationen in Draufsicht erstellt worden sind, ohne humane Interaktion zu sinnvollen Ergebnissen führt. Dies gilt auch für Erscheinungen, wie Verdrängung, Unterbrechung und Abbruch von Höhenlinien, stark schwankender Punktdichte, verschlungener Höhenlinien, die bei für die Visualisierung in Draufsicht (2D-Darstellung) ausgelegten Karten häufig vorkommen und hier nicht auftreten. Bei anderen Verfahren sich ergebende sog. Terrassenbildungen werden ebenfalls vermieden.

Das Geländemodell lässt sich aus objektorientierten Vektorkarten direkt in einer taktischen Applikation erstellen und gemeinsam mit diesen Karten verwenden, so dass das Geländemodell - anders als beim Stand der Technik - der taktischen Applikation nicht von extern zugeführt werden muss. Dadurch ergeben sich Vorteile, wie geringerer Versorgungsaufwand bei der Bereitstellung von geografischen Daten für die taktische Applikation, geringerer Pflegeaufwand bei der Einbeziehung von geografischen Informationen in die taktische Applikation und erhöhte Konsistenz zwischen Geländemodell bzw. daraus abgeleiteten Auswertungen und objektorientierten Vektordaten bzw. daraus abgeleiteten Darstellungen in der taktischen Applikation. Letzteres führt zu klareren Ergebnissen bei der dreidimensionalen Auswertung und Darstellung von Informationen zum geografischen Raum.

Mit dem erfindungsgemäßen Verfahren lassen sich mit sehr guten Ergebnissen regelmäßige Höhen- oder Tiefenfelder, Kartendarstellungen mit Höhenstufen, Kartendarstellungen mit Schummerung, Sichtbarkeitsbereiche im Gelände für optische und andere elektromagnetische Strahlung, Geländeschnitte, Schrägansichten des Geländes aus objektorientierten Vektorkarten erzeugen und folgende taktische Applikationen unterstützen: Bodennavigation, Bahnplanung, Drohnenplanung, Sichtbarkeitsanalysen für Radar, Plausibilitätsprüfungen für ESM-Daten, Bedrohungsanalyse für Luftangriffe aus verdeckten Tälern, Ausbreitungsberechnungen für Sonarsignale, Bahnplanung für Torpedos und U-Boote und Missionsplanung für Einsatzfahrzeuge.

Erfindungsgemäß werden die Höhenwerte der Stützpunkte in Zuordnung zu der kartographischen Lage der Stützpunkte als Stützwerte in Rasterfelder eines regelmäßigen Rasters eingeschrieben und die Extrapolation der Stützwerte und die anschließende gewichtete Interpolation der Extrapolationswerte im Raster durchgeführt.

Erfindungsgemäß wird bei der Extrapolation das Raster zeilen-und spaltenweise, Rasterfeld für Rasterfeld durchlaufen und dabei im ersten Durchlauf jeder in einem Rasterfeld abgelegte Höhenwert eines Stützwerts in ein in Durchlaufrichtung angrenzendes, unbelegtes Rasterfeld als Extrapolationswert eingeschrieben. In allen weiteren Durchläufen wird jeder in einem Rasterfeld abgelegte Höhenwert und jeder davon abgeleitete Extrapolationswert in ein in Durchlaufrichtung angrenzendes, unbelegtes Rasterfeld als Extrapolationswert Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Vorgehensweise bei der Extrapolation wird das Raster zeilen- und spaltenweise, Rasterfeld für Rasterfeld durchlaufen und dabei im ersten Durchlauf jeder in einem Rasterfeld abgelegte Stützwert in ein in Durchlaufrichtung angrenzendes, unbelegtes Rasterfeld als Extrapolationswert eingeschrieben. In allen weiteren Durchläufen wird jeder in einem Rasterfeld abgelegte Stützwert und jeder davon abgeleitete Extrapolationswert in ein in Durchlaufrichtung angrenzendes, unbelegtes Rasterfeld eingeschrieben. Allen Extrapolationswerten wird eine Distanzziffer zugeordnet, welche die Nähe des Extrapolationswerts zu seinem Stützwert kennzeichnet. Die Durchläufe durch das Raster werden in vorgegebener Reihenfolge solange wiederholt, bis alle im Startzeitpunkt unbelegten Rasterfelder mit Extrapolationswerten belegt sind.

Erfindungsgemäß wird die Interpolation in der Weise durchgeführt, dass das Raster wiederum zeilen-und spaltenweise, Rasterfeld für Rasterfeld durchlaufen wird und dabei zwischen zwei in Durchlaufrichtung unmittelbar aneinandergrenzenden Höhenwerten, die eine Höhendifferenz ungleich Null aufweisen und von denen zumindest der in Durchlaufrichtung folgende Höhenwert ein Extrapolationswert ist, gewichtet interpoliert und dieser Extrapolationswert mit dem Interpolationswert überschrieben wird. Die Durchläufe werden in vorgegebener Reihenfolge solange wiederholt, bis im Raster kein Extrapolationswert mehr vorhanden ist, dessen Höhenangabe eine von Null abweichende Höhendifferenz zu einem angrenzenden Höhenwert, der ein Stützwert oder ein Interpolationswert sein kann, aufweist.

Die zeilen- und spaltenweisen Durchläufe durch das Rasterfeld bei der Extra- und Interpolation können beliebig vorgenommen werden, wobei eine einmal gewählte Reihenfolge bei weiteren Durchlaufzyklen unverändert beibehalten wird. Beispielsweise kann ein Durchlaufzyklus aus einem zeilenweisen Durchlauf von links nach rechts, einem anschließenden zeilenweisen Durchlauf von rechts nach links, einem Durchlauf von oben nach unten und einen Durchlauf von unten nach oben bestehen. Die genannte Reihenfolge der Durchläufe in einem Durchlaufzyklus kann beliebig vertauscht werden, doch wird die einmal gewählte Reihenfolge in den folgenden Durchlaufzyklen beibehalten.

Die Erfindung ist anhand eines in der Zeichnung illustrierten Ausführungsbeispiels des Verfahrens im Folgenden näher beschrieben. Es zeigen:

Fig. 1    Elemente aus einer objektorientierten Vektorkarte im Vergleich ihrer Lage zu einem regelmäßigen Raster,
Fig. 2    ein regelmäßiges Raster mit den registrierten Elementen aus der objektorientierten Vektorkarte in Fig. 1,
Fig. 3    eine Illustrierung des Ablaufs der Extrapolation im Raster über sechs Durchläufe des Rasters (Fig. 3-1 bis 3-6),
Fig. 4    eine Illustrierung des Ablaufs der gewichteten Interpolation über vierundzwanzig Durchläufe des Rasters (Fig. 4-1 bis 4-24),
Fig. 5    eine Illustrierung des Ablaufs der Extrapolation von sog. Bruchkanten.

Das in der Zeichnung anhand eines ausgewählten Beispiels für einen Geländeausschnitt illustrierte Verfahren generiert ein dreidimensionales Geländemodell auf Basis von objektorientierten Vektorkarten, die unter starker Berücksichtigung der Visualisierung von Höhen- bzw. Tiefeninformationen in Draufsicht erstellt worden sind. Solche objektorientierten Vektorkarten sind in elektronischer Form verfügbar. Im folgenden wird nur noch von Höhenwerten bzw. Höhenangaben gesprochen, wobei Tiefenwerte bzw. Tiefenangaben als negative Höhenwerte bzw. Höhenangaben betrachtet werden. Solche Geländemodelle dienen zur dreidimensionalen Auswertung und Darstellung der zu ihrer Herstellung verwendeten objektorientierten Vektorkarten. Das Verfahren erstellt die Geländemodelle vollautomatisch ohne menschliche Interaktion, wobei die Erstellung direkt in einer taktischen Applikation vorgenommen werden kann. Solche taktischen Applikationen sind beispielsweise Bodennavigation, Bahnplanung, Drohneneinsatzplanung, Missionsplanung für Einsatzfahrzeuge mit Navigation und dgl., Bahnplanung für einen Torpedoschuss, Missionsplanung für U-Boote, Bedrohungsanalysen für Luftangriffe etc.

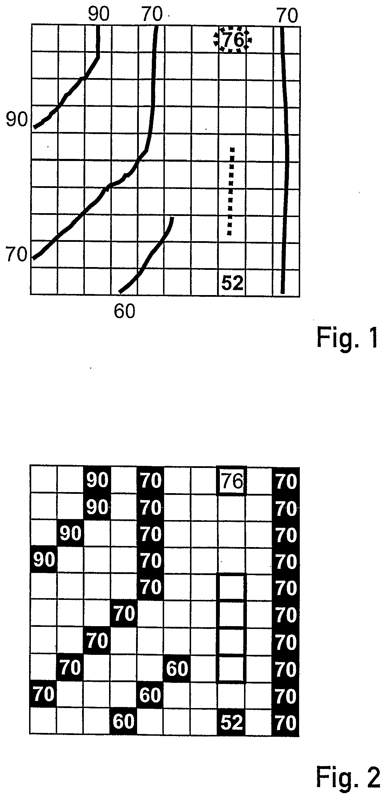

In Fig. 1 ist ein Geländeausschnitt aus einer objektorientierten Vektorkarte dargestellt, in dem Objekte und Elemente mit Höhenangaben lagerichtig enthalten sind. Beispielhaft sind Höhenlinien mit den Höhenangaben "90", "70", "60" dargestellt. "52" stellt eine kartierte Höhe, z.B. eine Kuppe dar, die punktiert umrahmte "76" ist ein sog. Bruchpunkt mit der Höhe "76", die punktierte Linie stellt eine längere Bruchkante ohne Höhenangabe dar. Ein Bruchpunkt mit Höhenangabe kann beispielsweise ein Turm sein, eine Bruchkante ohne Höhenangabe z.B. ein Fluss, eine Staumauer oder dgl..

Um mit diesen im Gelände ungleichmäßig verteilten Stützpunkten ein Geländemodell zu erstellen, das zu einer dreidimensionalen Auswertung und Darstellung des Geländeausschnitts tauglich ist, wird wie folgt vorgegangen: Die aus der objektorientierten Vektorkarte für den gewählten Geländeabschnitt verfügbaren, unregelmäßig verteilten Stützpunkte mit Höhenangaben werden lagerichtig in ein gleichmäßiges Raster übernommen. In Fig. 1 ist dieses Raster ausschließlich zur Illustrierung der Lage der Objekte und Elemente auf den Geländeabschnitt aufgelegt. Die Höhenangaben der Stützpunkte werden als Stützwerte lagerichtig in die Rasterfelder des Rasters eingeschrieben. In Fig. 2 sind die mit Stützwerten (Höhenwerte der Stützpunkte) belegten Rasterfelder durch Schwärzung und den Höhenangaben "90", "70", "60", "52" gekennzeichnet. Bruchpunkte und Bruchkanten sind durch schwarze Umrahmungen der zugehörigen Rasterfelder symbolisiert. Im Rasterfeld für den Bruchpunkt mit Höhenangabe ist die Höhenangabe "76" eingeschrieben.

In diesem so belegten Raster werden nun alle Höhenwerte der Stützpunkte, kurz Stützwerte, extrapoliert und anschließend alle Extrapolationen einer gewichteten Interpolation unterzogen. Die von den Bruchpunkten mit und ohne Höhenangabe belegten Rasterfelder bleiben dabei zunächst ausgespart.

Die Extrapolation verläuft grundsätzlich in der Weise, dass das Raster zeilen- und spaltenweise, Rasterfeld für Rasterfeld durchlaufen wird und dabei im ersten Durchlauf jeder in einem Rasterfeld abgelegte Stützwert in ein in Durchlaufrichtung angrenzendes Rasterfeld als Extrapolationswert eingeschrieben wird, wenn dieses unbelegt ist, und in allen weiteren Durchläufen jeder in einem Rasterfeld abgelegte Stützwert und jeder davon abgeleitete Extrapolationswert in ein in Durchlaufrichtung angrenzendes Rasterfeld eingeschrieben wird, wenn dieses unbelegt ist. Allen Extrapolationswerten wird eine die Nähe des Extrapolationswertes zu seinem Stützwert kennzeichnende Distanzziffer zugeordnet. Die Durchläufe werden solange wiederholt, bis alle beim Start der Extrapolation unbelegten Rasterfelder mit Extrapolationswerten belegt sind.

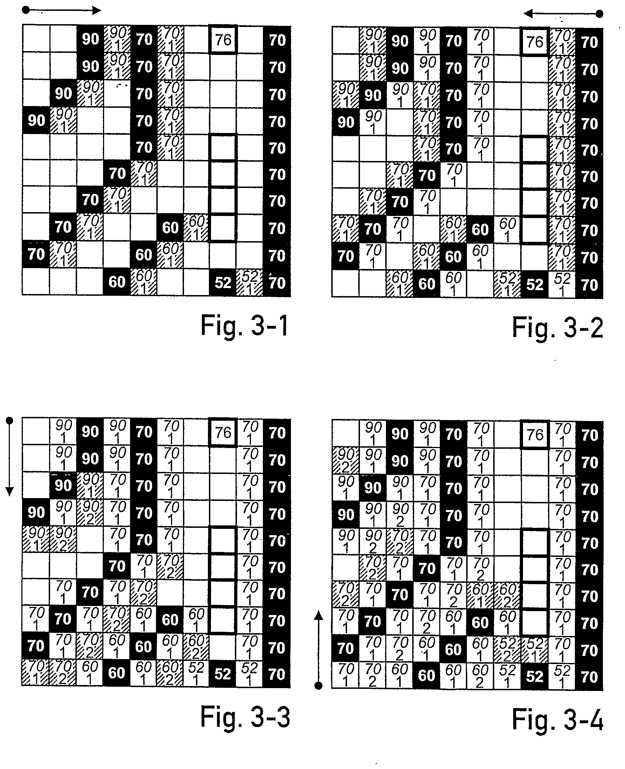

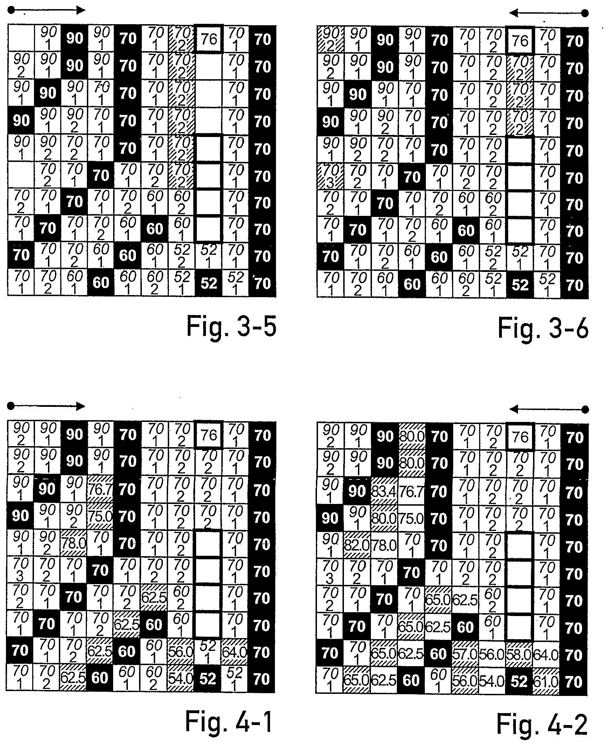

In Fig. 3 ist die Extrapolation im Einzelnen dargestellt, wobei insgesamt sechs zeilen-und spaltenweise Durchläufe benötigt werden, um alle Rasterfelder mit Extrapolationswerten zu belegen. Die Richtung der einzelnen Durchläufe ist in Fig. 3 durch Pfeile am Raster gekennzeichnet. So erfolgt ein erster zeilenweiser Durchlauf durch das Raster gemäß Fig. 3-1 von links nach rechts, Zeile für Zeile, bis das gesamte Raster durchlaufen ist. Die von den Stützwerten abgeleiteten Extrapolationswerte erhalten die gleiche Höhenangabe und zusätzlich die Distanzziffer, die mit "1" angegeben wird, weil der Extrapolationswert unmittelbar vom Stützwert abgeleitet ist, also die größte Nähe zu diesem hat. Die mit den so entstandenen Extrapolationswerten belegten Rasterfelder sind in dem Raster der Fig. 3-1 schraffiert dargestellt. Nach dem Durchlauf gemäß Fig. 3-1 sind alle Rasterfelder, die rechts von einem Stützwert, unmittelbar an diesem angrenzend, liegen, mit einem Extrapolationswert belegt.

Der nächste Durchlauf erfolgt zeilenweise von rechts nach links, wie dies in Fig. 3-2 angedeutet ist. Durch die beschriebene Extrapolationsvorschrift werden nunmehr alle links von den Stützwerten liegenden, unmittelbar an die Stützwerte angrenzenden Rasterfelder, soweit sie noch unbelegt sind, mit den von den Stützwerten abgeleiteten Extrapolationswerten belegt. Sie erhalten wiederum die gleichen Höhenangaben wie die Stützwerte und zusätzlich die Distanzziffer "1", da sie direkt von den Stützwerten abgeleitet sind. In Fig. 3-2 sind die Rasterfelder, die bei diesem Durchlauf mit Extrapolationswerten belegt worden sind, durch Schraffur gekennzeichnet.

Im dritten, in Fig. 3-3 dargestellten Durchlauf wird das Raster spaltenweise, Spalte für Spalte, von oben nach unten durchlaufen. Dabei werden nicht nur Extrapolationswerte von Stützwerten abgeleitet, sondern auch von bereits vorhandenen Extrapolationswerten. Die von Extrapolationswerten abgeleiteten Extrapolationswerte erhalten eine Distanzziffer, die um "1" gegenüber der Distanzziffer desjenigen Extrapolationswerts vergrößert ist, von dem der neu entstandene Extrapolationswert abgeleitet ist. In Fig. 3-3 wird beispielsweise bei diesem spaltenweisen Durchlauf in der ersten Spalte von dem Stützwert "90" der Extrapolationswert "90" (schraffiert) abgeleitet, dem die Distanzziffer "1" zugeordnet ist. In der zweiten Spalte wird beim spaltenweisen Durchlauf von oben nach unten von dem Extrapolationswert "90" mit der Distanzziffer "1" ein neuer Extrapolationswert "90" mit der Distanzziffer "2" (schraffiert) abgeleitet.

Der nächste Durchlauf erfolgt wiederum spaltenweise, diesmal aber von unten nach oben (Fig. 3-4). Die bei diesem Durchlauf neu entstehenden Extrapolationswerte, die wiederum in die in Durchlaufrichtung unmittelbar angrenzenden, noch leeren Rasterfelder eingeschrieben werden, sind in Fig. 3-4 wiederum durch schraffierte Rasterfelder erkennbar.

Nunmehr erfolgt ein weiterer Durchlauf, diesmal wiederum zeilenmäßig von links nach rechts gemäß Fig. 3-5, wobei die mit den neu entstehenden Extrapolationswerten belegten Rasterfelder ebenfalls schraffiert sind.

Der nächste Durchlauf wird wiederum zeilenmäßig von rechts nach links vorgenommen. Dieser Durchlauf liefert die in Fig. 3-6 schraffierten Rasterfelder mit den entsprechenden Extrapolationswerten. Nach diesem Durchlauf gemäß Fig. 3-6 sind alle Rasterfelder belegt und damit der Extrapolationsvorgang beendet.

Es ist nicht zwingend, dass die in Fig. 3 angegebene Reihenfolge der zeilen- und spaltenweisen Durchläufe durch das Raster eingehalten wird. So kann beispielsweise auch erst ein zeilenweiser Durchlauf von rechts nach links oder ein spaltenweiser Durchlauf von oben nach unten oder umgekehrt erfolgen. Wichtig ist lediglich, dass aufeinanderfolgend jeweils ein anderer Durchlauf gewählt und nicht ein gleichartiger Durchlauf hintereinander ausgeführt wird, und dass eine einmal gewählte Reihenfolge der Durchläufe in allen Zyklen beibehalten wird.

Alle in dem Raster enthaltenen Extrapolationswerte werden nunmehr einer gewichteten Interpolation, die linear ist, unterzogen, wobei zur Wichtung der Interpolation die Distanzziffern der Extrapolationswerte herangezogen werden. Im folgenden wird für Stützwerte, Extrapolationswerte und Interpolationswerte der Oberbegriff "Höhenwerte" benutzt.

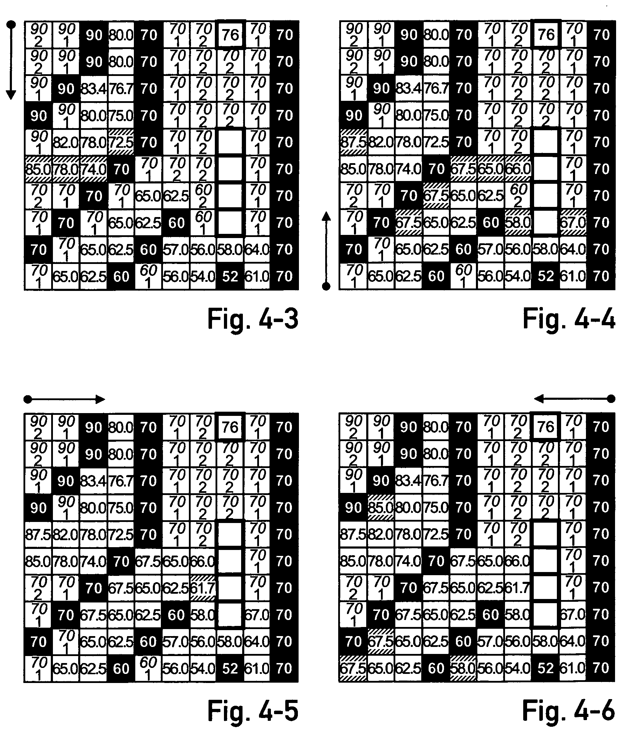

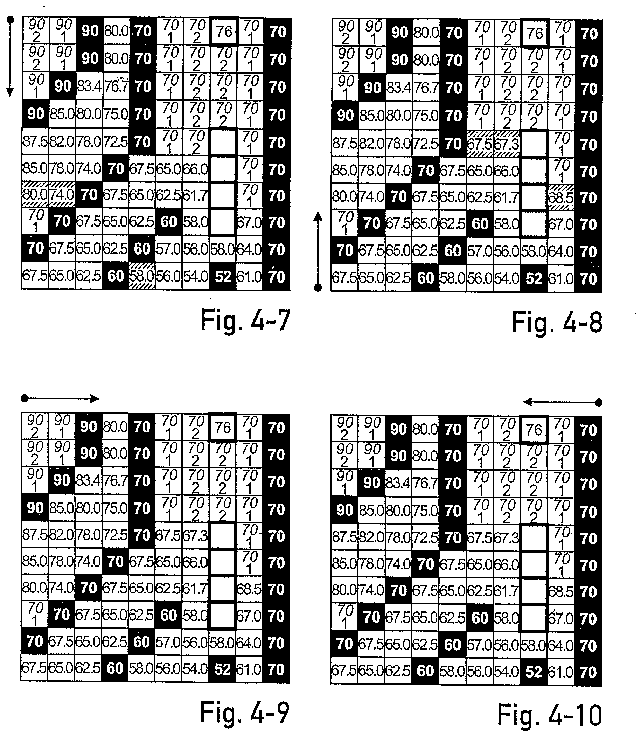

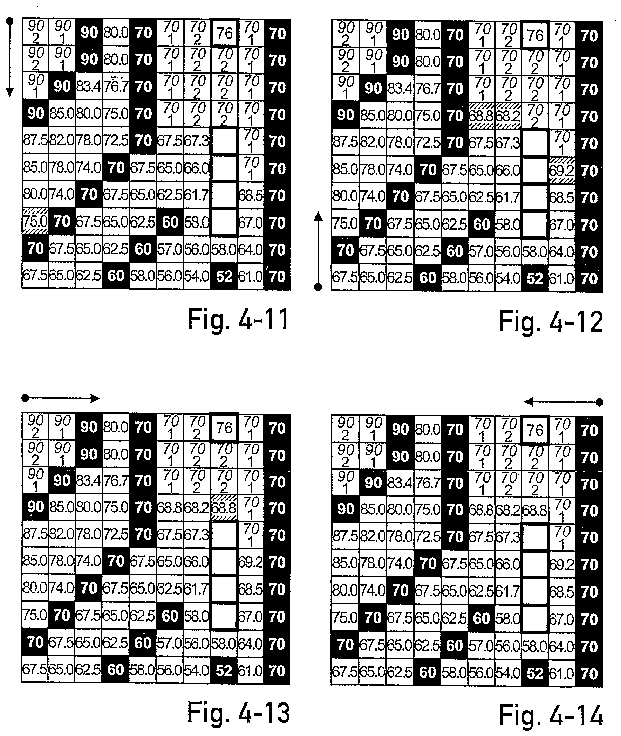

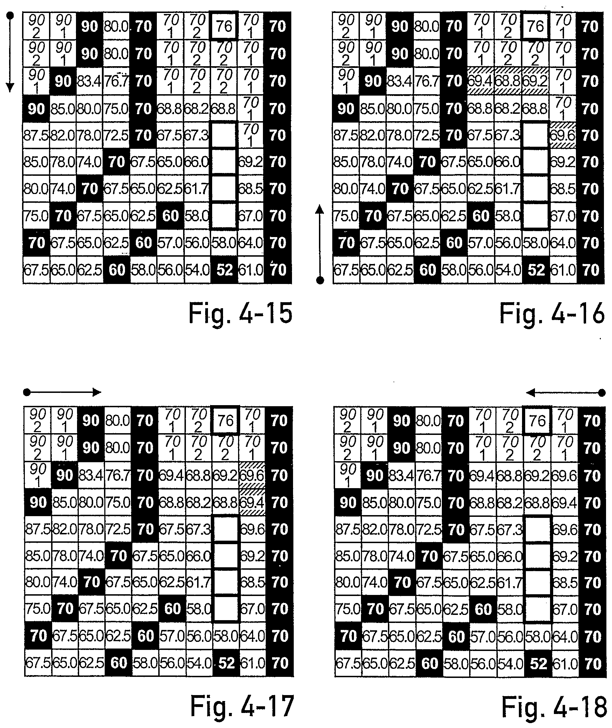

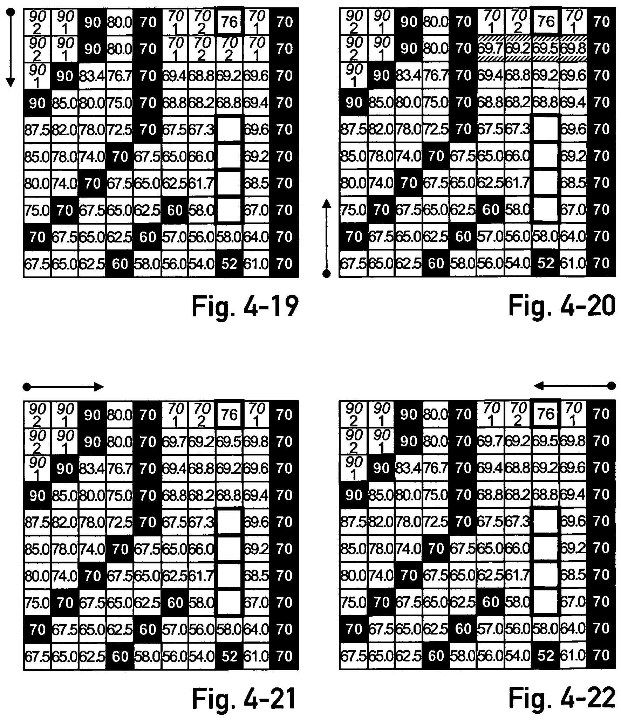

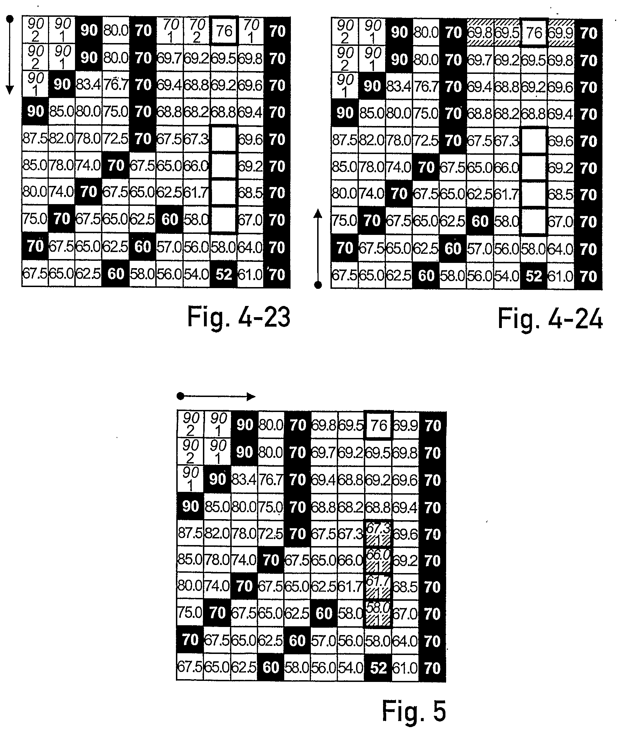

Auch bei der Interpolation wird das Raster zeilen- und spaltenweise, Rasterfeld für Rasterfeld durchlaufen. Auch hier gilt, dass dabei die Reihenfolge der Durchläufe variiert werden kann und lediglich eine einmal gewählte Reihenfolge der Durchläufe bis zum Ende der Interpolation beibehalten werden muss. Bei der in Fig. 4 in den einzelnen Durchläufen illustrierten Interpolation ist die gleiche Reihenfolge der Durchläufe eingehalten wie bei der Extrapolation. Jeder Durchlaufzyklus umfasst einen zeilenweisen Durchlauf von links nach rechts (Fig. 4-1) und einen zeilenweisen Durchlauf von rechts nach links (Fig. 4-2), sowie einen spaltenweisen Durchlauf von oben nach unten (Fig. 4-3) und einen spaltenweisen Durchlauf von unten nach oben (Fig. 4-4). Dieser Durchlaufzyklus wird so oft wiederholt, wie dies bis zum Abschluss der Interpolation erforderlich ist.

Bei jedem Durchlauf wird jeweils zwischen zwei in Durchlaufrichtung unmittelbar aneinander angrenzenden Höhenwerten, die eine Höhendifferenz ungleich Null aufweisen und von denen zumindest der in Durchlaufrichtung folgende Höhenwert ein Extrapolationswert ist, gewichtet linear interpoliert und letzterer mit dem Interpolationswert überschrieben. Der Interpolationswert $H_i$ wird berechnet gemäß

$$H_i = H_1 + \frac{H_2 - H_1}{D_1 + D_2 + 1} \cdot (D_1 + 1) \tag{1},$$

wobei $H_1$ der in Durchlaufrichtung erste Höhenwert, der ein Stützwert, ein Extrapolationswert oder ein Interpolationswert sein kann, $D_1$ dessen Distanzziffer ist und $H_2$ der in Durchlaufrichtung folgende Höhenwert, der immer ein Extrapolationswert sein muss, und $D_2$ dessen Distanzziffer ist. Jedem Höhenwert, der ein Stützwert oder ein Interpolationswert ist, ist bei der Berechnung nach Gl.(1) die Distanzziffer "0" zugewiesen. Die zeilen- und spaltenweisen Durchläufe des Rasters erfolgt gemäß dem in Fig. 4-1 bis 4-4 dargestellten Durchlaufzyklus. Die Durchlaufrichtungen sind durch die an den Rastern dargestellten Pfeile gekennzeichnet. Die bei dem jeweiligen Durchlauf berechneten und übergeschriebenen Interpolationswerte sind durch schraffierte Rasterfelder markiert.

Beispielhaft wird die Berechnung des im ersten Durchlauf gemäß Fig. 4-1 entstehenden Interpolationswerts "76,7", der in das Rasterfeld der dritten Zeile und vierten Spalte eingeschrieben ist, nachstehend erläutert. Wie aus dem Raster in Fig. 3-6 zu erkennen ist, ist dieses Rasterfeld nach Ende des Extrapolationsvorgangs mit dem Extrapolationswert "70" und der zugewiesenen Distanzziffer "1" belegt. Nach dem vorstehend Gesagten, findet bei dem zeilenweisen Durchlauf gemäß Pfeil in Fig. 4-1 die Interpolation zwischen diesem Extrapolationswert und dem vorangegangenen Extrapolationswert "90" mit der Distanzziffer "1" statt. In Gl.(1) ist damit $H_1=90$, $H_2=70$, $D_1=1$ und $D_2=1$. Aus Gl.(1) ergibt sich damit

$$H_i = 90 + \frac{70 - 90}{1 + 1 + 1} \cdot (1 + 1) = 76,7 \; .$$

Der an der Interpolation beteiligte Extrapolationswert $H_2=70$, der in Durchlaufrichtung dem zur Interpolation herangezogenen anderen Extrapolationswert $H_1=90$ unmittelbar folgt, wird nunmehr mit diesem Interpolationswert $H_i=76,7$ überschrieben. Das überschriebene Rasterfeld mit dem Interpolationswert "76,7" ist in Fig. 4-1 schraffiert dargestellt.

Wenn der erste Durchlaufzyklus beendet ist und im Raster noch nicht mit Interpolationswerten überschriebene Extrapolationswerte vorhanden sind, die zu den in Durchlaufrichtung unmittelbar vorangehende Höhenwert eine Höhendifferenz ungleich Null aufweisen, wird ein weiterer Zyklus von zeilenweisen und spaltenweisen Durchläufen in gleicher Reihenfolge durchgeführt, wie dies aus Fig. 4-5 bis 4-8 hervorgeht. Beispielhaft sei noch das Zustandekommen des Interpolationswerts "80,0" im Rasterfeld von Spalte 1 und Zeile 7 des Rasters beim spaltenweisen Durchlauf von oben nach unten gemäß Fig. 4-7 erläutert. Im vorhergehenden Durchlauf (Fig. 4-6) war dieses Rasterfeld mit dem Extrapolationswert "70" und der zugeordneten Distanzziffer "2" belegt. Beim Durchlauf gemäß Fig. 4-7 erfolgt nach dem vorher Gesagten nunmehr eine Interpolation zwischen dem Interpolationswert $H_1=85,0$ mit dem Distanzziffer "0" und dem in Durchlaufrichtung unmittelbar folgenden Extrapolationswert $H_2=70$ mit der Distanzziffer $D_2=2$. Nach Gl.(1) ergibt sich

$$H_i = 85 + \frac{70 - 85}{0 + 2 + 1} \cdot (0 + 1) = 80 \ .$$

Mit diesem neuen Interpolationswert $H_i=80$ wird der Extrapolationswert $H_2=70$ überschrieben, so dass das in Fig. 4-7 schraffierte Rasterfeld mit dem neuen Interpolationswert "80" entsteht.

Da nach Abschluss des Durchlaufzyklusses im Raster gemäß Fig. 4-8 noch einige Rasterfelder mit Extrapolationswerten belegt sind, schließt sich ein weiterer Durchlaufzyklus mit den Durchläufen gemäßen Fig. 4-9 bis Fig. 4-12, ein weiterer Durchlaufzyklus gemäß Fig. 4-13 bis Fig. 4-16, wiederum ein Durchlaufzyklus mit den Durchläufen gemäß Fig. 4-17 bis Fig. 4-20 und ein letzter Durchlaufzyklus mit den Durchläufen gemäß Fig. 4-21 bis Fig. 4-24 an. Wie an den in Fig. 4-14, 4-15, 4-18, 4-19, 4-21, 4-22 und 4-23 nicht vorhandenen, schraffierten Rasterfeldern zu erkennen ist, entstehen bei den Durchläufen gemäß diesen Fig. aufgrund der Interpolationsvorschrift keine Interpolationswerte. Im letzten Durchlauf gemäß Fig. 4-24 ist zu erkennen, dass alle Rasterfelder (natürlich mit Ausnahme der ausgeklammerten Rasterfelder mit Stützwerten und Bruchkanten) mit Interpolationswerten belegt sind und keine einer Interpolation zu unterziehende Extrapolationswerte mehr vorhanden sind. Die in Fig. 4-24 in der linken oberen Ecke noch zu sehenden fünf Rasterfelder mit den Extrapolationswerten "90" bleiben erhalten, da diese Extrapolationswerte nicht an Höhenwerten angrenzen, zu denen eine Höhendifferenz ungleich Null besteht, und daher nach der vorstehend beschriebenen Interpolationsvorschrift keine Interpolation vorgenommen wird.

Wie bereits eingangs erwähnt, werden bei der Extrapolation und gewichteten linearen Interpolation Rasterfelder, denen Bruchpunkte oder Bruchkanten zugeordnet sind (im Raster schwarz umrahmt) ausgeklammert. Da Stützwerte mit Bruchkanteneigenschaften ohne Höhenangaben in der Regel einen dem Gelände entsprechenden Höhenwert aufweisen, z.B. ein eine Bruchkante darstellendes Flussufer, werden mit einer anschließenden Extrapolation die Rasterfelder mit Bruchkanteneigenschaften ohne Höhenangabe mit einem Extrapolationswert belegt. In Fig. 5 ist dieser Vorgang im Raster skizziert. Da nach dem Abschluss des letzten Durchlaufzyklusses mit einem spaltenweisen Durchlauf gemäß Fig. 4-24 von unten nach oben der nächste Durchlaufzyklus mit einem zeilenweisen Durchlauf von links nach rechts beginnt, werden nunmehr die in die leeren Rasterfelder mit Bruchkanteneigenschaften eingeschriebenen Extrapolationswerte von den in Durchlaufrichtung vorausgehenden Höhenwerten, die hier Interpolationswerte sind, abgeleitet. Diesen Extrapolationswerten wird wiederum eine Distanzziffer zugeordnet, die jetzt die Nähe des Extrapolationswerts zu dem Höhenwert angibt, von dem der Extrapolationswert abgeleitet ist. Da bei dem gewählten Ausführungsbeispiel nur jeweils in Spaltenrichtung aneinanderstoßende Rasterfelder Bruchkanteneigenschaften aufweisen, sind mit diesem einen Durchlauf alle Rasterfelder mit Bruchkanteneigenschaften mit einem Extrapolationswert belegt, so dass weitere Durchläufe nicht mehr durchgeführt werden. Wären beispielsweise in Zeilenrichtung noch weitere Rasterfelder einer Spalte mit Bruchkanten ohne Höhenangaben belegt, so würden diese Rasterfelder bei dem folgenden Durchlauf von links nach rechts ebenfalls mit einem Extrapolationswert mit Distanzziffer belegt. Weisen diese eine Höhendifferenz ungleich Null zu den zuvor entstandenen Extrapolationswerten auf, so wird zwischen den Extrapolationswerten in der vorstehend beschriebenen Weise interpoliert.

Abschließend wird geprüft, ob an die Rasterfelder mit Bruchkanteneigenschaft angrenzende Rasterfelder verblieben sind, die noch unbelegt sind. Ist dies der Fall, so werden diese Rasterfelder mit einem Extrapolationswert belegt, der von den in Durchlaufrichtung unmittelbar vorausgehenden Extrapolationswert im Rasterfeld mit Bruchkanteneigenschaften in der beschriebenen Weise abgeleitet wird.

In dem durch das Raster gemäß Fig. 5 repräsentierten Geländemodell ist jeder Rasterpunkt mit einer vorgegebenen Höhe (Stützwerte und Bruchpunkte mit Höhenangabe) mit einer interpolierten Höhe oder einer extrapolierten Höhe belegt. Dieses Geländemodell kann nach bekannten Verfahren dreidimensional ausgewertet oder dargestellt werden.

**Patentansprüche**

1. Verfahren zur automatischen Generierung eines dreidimensionalen Geländemodells für eine 3D-Geländedarstellung und -auswertung unter Zuhilfenahme von objektorientierten elektronischen Vektordaten, die für das Gelände beschreibende und durch geeignete Vermessung der Geländeoberfläche bzw. des Meeresboden gewonnene Stützpunkte mindestens deren kartographische Lage angebende Positionswerte und deren Höhe oder Tiefen gegenüber einem Bezugsniveau angebende Höhenwerte enthalten,

wobei aus den Höhenwerten der Stützpunkte Extrapolationswerte extrapoliert und die Extrapolationswerte einer gewichteten Interpolation unterzogen werden,

wobei die Höhenwerte der Stützpunkte in Zuordnung zu der kartographischen Lage der Stützpunkte als Stützwerte in Rasterfelder eines regelmäßigen Rasters eingeschrieben und Extrapolation und Interpolation im Raster durchgeführt werden,

wobei zur Extrapolation das Raster zeilen- und spaltenweise, Rasterfeld für Rasterfeld durchlaufen wird und dabei im ersten Durchlauf jeder in einem Rasterfeld abgelegte Stützwert in ein in Durchlaufrichtung angrenzendes, unbelegtes Rasterfeld als Extrapolationswert eingeschrieben wird und in allen weiteren Durchläufen jeder in einem Rasterfeld abgelegte Stützwert und jeder davon abgeleitete Extrapolationswert in ein in Durchlaufrichtung angrenzendes, unbelegtes Rasterfeld eingeschrieben wird,

wobei allen Extrapolationswerten eine die Nähe des Extrapolationswerts zu seinem Stützwert kennzeichnende Distanzziffer zugeordnet wird

wobei die Durchläufe solange wiederholt werden, bis alle im Startzeitpunkt der Extrapolation unbelegte Rasterfelder mit Höhenwerten darstellenden Extrapolationswerten belegt sind,

wobei zur Interpolation das Raster zeilen- und spaltenweise, Rasterfeld für Rasterfeld durchlaufen wird, wobei jeweils zwischen zwei in Durchlaufrichtung unmittelbar aneinandergrenzenden Höhenwerten, die eine Höhendifferenz ungleich Null aufweisen und von denen zumindest der in Durchlaufrichtung folgende Höhenwert ein Extrapolationswert ist, gewichtet interpoliert und letzterer mit dem Interpolationswert überschrieben wird, wobei die Durchläufe solange wiederholt werden, bis keine Extrapolationswerte mehr vorhanden sind, die mit einer Höhendifferenz ungleich Null an einem Höhenwert angrenzen, und

wobei zur Wichtung der Interpolation die Distanzziffern der Extrapolationswerte herangezogen werden.

2. Verfahren nach Anspruch 1, **dadurch gekennzeichnet, dass** die Distanzziffer eines Extrapolationswerts mit "1" angegeben wird, wenn der Extrapolationswert unmittelbar vom Stützwert abgeleitet ist, und für jeden von einem Extrapolationswert abgeleiteten Extrapolationswert um "1" gegenüber dessen Distanzziffer erhöht wird.

3. Verfahren nach Anspruch 1 oder Anspruch 2, **dadurch gekennzeichnet, dass** der Interpolationswert Hi berechnet wird gemäß:

$$H_i \;=\; H_1 \;+\; \frac{H_2 - H_1}{D_1 + D_2 + 1} \;\cdot\; (D_1 + 1)$$

wobei $H_1$ der in Durchlaufrichtung erste Höhenwert und D1 dessen Distanzziffer ist und $H_2$ der in Durchlaufrichtung als Extrapolationswert folgende Höhenwert und D dessen Distanzziffer ist und jedem Höhenwert, der ein Stützwert oder ein Interpolationswert ist, die Distanzziffer "0" zugewiesen ist.

4. Verfahren nach einem der vorhergehenden Ansprüche, **dadurch gekennzeichnet, dass** zwei aufeinander folgende zeilenweise Durchläufe durch das gesamte Raster, nämlich zunächst einer von links nach rechts und anschließend einer von rechts nach links oder umgekehrt, durchgeführt werden und zwei aufeinander folgende spaltenweise Durchläufe durch das gesamte Raster, nämlich zunächst einer von oben nach unten und anschließend einer von unten nach oben oder umgekehrt, durchgeführt werden.

5. Verfahren nach Anspruch 4, **dadurch gekennzeichnet, dass** ein Durchlaufzyklus mit einer Reihenfolge von zwei zeilenweisen und zwei spaltenweisen Durchläufen festgelegt wird und in aufeinanderfolgenden Durchlaufzyklen die Reihenfolge unverändert belassen wird.

**Claims**

1. Method for automatic generation of a three-dimensional terrain model for a 3D terrain representation and evaluation with the assistance of object-oriented electronic vector data, which contains position values which indicate at least the cartographic position of support points which describe the terrain and are obtained by suitable surveying of the terrain surface or of the seabed and height values which indicate their height or depth with respect to a reference level,

wherein extrapolation values are extrapolated from the height values of the support points, and the extrapolation values are subject to weighted interpolation,

wherein the height values of the support points are written to grid fields of a regular grid as support values associated with the cartographic position of the support points, and extrapolation and interpolation are carried out in the grid, wherein the grid is run through in rows and columns, grid field by grid field, for extrapolation and, in the first run in this case, each support value which is stored in a grid field is written as an extrapolation value to an unoccupied grid field which is adjacent in the direction of the run, and, in all the other runs, each support value which is stored in a grid field and each extrapolation value derived therefrom is written to an unoccupied grid field which is adjacent in the direction of the run,

wherein all the extrapolation values are allocated a distance figure which indicates the proximity of the extrapolation value to its support value, wherein the runs are repeated until all of the grid fields which were unoccupied at the extrapolation start time are occupied with extrapolation values which represent height values,

wherein, for interpolation, the grid is run through in rows and columns, grid field by grid field,

wherein weighted interpolation is carried out in each case between two height values which are immediately adjacent to one another in the direction of the run, have a height difference not equal to zero and of which at least the height value which follows in the direction of the run is an extrapolation value, and the latter is overwritten with the interpolation value,

wherein the runs are repeated until there are no more extrapolation values which are adjacent to a height value with a height difference not equal to zero, and

wherein the distance figures of the extrapolation values are used for weighting the interpolation.

2.  Method according to Claim 1, **characterized in that** the distance figure of an extrapolation value is indicated by "1" when the extrapolation value is derived directly from the support value, and is increased by "1" with respect to its distance figure for each extrapolation value derived from an extrapolation value.

3.  Method according to Claim 1 or 2, **characterized in that** the interpolation value $H_i$ is calculated using:

$$H_i = H_1 + \frac{H_2 - H_1}{D_1 + D_2 + 1} \cdot (D_1 + 1)$$

where $H_1$ is the first height value in the direction of the run and $D_1$ is its distance figure, and $H_2$ is the following height value as an extrapolation value in the direction of the run and D is its distance figure, and each height value which is a support value or an interpolation value is assigned the distance figure "0".

4.  Method according to one of the preceding claims, **characterized in that** two successive runs row-by-row through the entire grid are carried out, namely initially one from left to right and then one from right to left, or vice versa, and two successive runs through the entire grid column-by-column are carried out, namely first of all one from top to bottom and then one from bottom to top, or vice versa.

5.  Method according to Claim 4, **characterized in that** a run cycle is defined by a sequence of two runs row-by-row and two runs column-by-column and the sequence is left unchanged in successive run cycles.

**Revendications**

1.  Procédé de production automatique d'un modèle topographique tridimensionnel pour une représentation et exploitation topographique tridimensionnelle en faisant appel à des données vectorielles électroniques orientées objet, qui contiennent les points d'appui décrivant le terrain et acquis par mesure appropriée de la surface topographique ou du fond marin au moins de leurs valeurs de position indiquant la position cartographique et de leurs valeurs d'altitude indiquant la hauteur ou la profondeur par rapport à un niveau de référence,

des valeurs d'extrapolation étant extrapolées à partir de valeurs d'altitude des points d'appui et les valeurs d'extrapolation étant soumises à une interpolation pondérée,

les valeurs d'altitude des points d'appui étant inscrites en affectation à la position cartographique des points d'appui en tant que valeurs de base dans des champs de grille d'une grille régulière et l'extrapolation et l'interpolation étant exécutées dans la grille,

la grille étant traversée en lignes et en colonnes, champ de grille pour champ de grille pour extrapolation et chaque valeur de base déposée dans un champ de grille à cet effet en premier passage étant inscrite en tant que valeur d'extrapolation dans un champ de grille voisin, non occupé dans le sens de passage et chaque valeur de base déposée dans un champ de grille dans tous les autres passages et chaque valeur d'extrapolation dérivée de celle-ci étant inscrite dans un champ de grille voisin, non occupé dans le sens du passage,

un indice de distance caractérisant la proximité de la valeur d'extrapolation à sa valeur de base étant attribué à toutes les valeurs d'extrapolation,

les passages étant répétés jusqu'à ce que tous les champs de grille non occupés au moment initial de l'extrapolation soient occupés par des valeurs d'extrapolation représentant les valeurs d'altitude,

la grille étant traversée en lignes et en colonnes, champ de grille pour champ de grille pour interpolation, respectivement entre deux valeurs d'altitude directement contigües dans le sens de passage, qui comportent une différence de hauteur non égale à zéro et desquelles au moins la valeur d'altitude suivante dans le sens de passage est une valeur d'extrapolation, étant interpolée de façon pondérée et cette dernière étant écrasée par la valeur d'interpolation,

les passages étant répétés jusqu'à ce qu'il n'y ait plus de valeurs d'extrapolation qui soient voisines d'une valeur d'altitude avec une différence de hauteur non égale à zéro, et

l'indice de distance des valeurs d'extrapolation étant mis à contribution pour la pondération de l'interpolation.

**2.** Procédé selon la revendication 1, **caractérisé en ce que** l'indice de distance d'une valeur d'extrapolation est indiqué par « 1 », lorsque la valeur d'extrapolation est directement dérivée de la valeur de base et est augmentée de « 1 » par rapport à l'indice de distance de celle-ci pour chaque valeur d'extrapolation dérivée d'une valeur d'extrapolation.

**3.** Procédé selon la revendication 1 ou la revendication 2, **caractérisé en ce que** la valeur d'interpolation Hi est calculée d'après la formule :

$$H_i = H_1 + \frac{H_2 - H_1}{D_1 + D_2 + 1} \cdot (D_1 + 1)$$

dans laquelle $H_1$ est la première valeur d'altitude dans le sens du passage et $D_1$ l'indice de distance de celle-ci et $H_2$ est la valeur d'altitude suivante en tant que valeur d'extrapolation dans le sens du passage et D l'indice de distance de celle-ci et l'indice de distance « 0 » étant attribué à chaque valeur d'altitude qui est une valeur de base ou une valeur d'interpolation.

**4.** Procédé selon l'une quelconque des revendications précédentes, **caractérisé en ce que** deux passages successifs par lignes sont exécutés à travers toute la grille, notamment d'abord un de gauche à droite et ensuite un de droite à gauche ou inversement et deux passages successifs par colonnes sont exécutés à travers toute la grille, notamment d'abord un du haut vers le bas et ensuite un du bas vers le haut ou inversement.

**5.** Procédé selon la revendication 4, **caractérisé en ce qu'**un cycle de passages est établi avec une succession de deux passages en lignes et deux passages en colonnes et la succession est laissée inchangée dans les cycles de passages successifs.

Fig. 1

Fig. 2

Fig. 3-1

Fig. 3-2

Fig. 3-3

Fig. 3-4

EP 1 631 938 B1

Fig. 3-5

Fig. 3-6

Fig. 4-1

Fig. 4-2

Fig. 4-3

Fig. 4-4

Fig. 4-5

Fig. 4-6

**Fig. 4-7**

**Fig. 4-8**

**Fig. 4-9**

**Fig. 4-10**

**Fig. 4-11**

**Fig. 4-12**

**Fig. 4-13**

**Fig. 4-14**

Fig. 4-15

Fig. 4-16

Fig. 4-17

Fig. 4-18

EP 1 631 938 B1

Fig. 4-19

Fig. 4-20

Fig. 4-21

Fig. 4-22

EP 1 631 938 B1

| 90 2 | 90 1 | 90 | 80.0 | 70 | 70 1 | 70 2 | 76 | 70 1 | 70 |
|---|---|---|---|---|---|---|---|---|---|
| 90 2 | 90 1 | 90 | 80.0 | 70 | 69.7 | 69.2 | 69.5 | 69.8 | 70 |
| 90 1 | 90 | 83.4 | 76.7 | 70 | 69.4 | 68.8 | 69.2 | 69.6 | 70 |
| 90 | 85.0 | 80.0 | 75.0 | 70 | 68.8 | 68.2 | 68.8 | 69.4 | 70 |
| 87.5 | 82.0 | 78.0 | 72.5 | 70 | 67.5 | 67.3 | | 69.6 | 70 |
| 85.0 | 78.0 | 74.0 | 70 | 67.5 | 65.0 | 66.0 | | 69.2 | 70 |
| 80.0 | 74.0 | 70 | 67.5 | 65.0 | 62.5 | 61.7 | | 68.5 | 70 |
| 75.0 | 70 | 67.5 | 65.0 | 62.5 | 60 | 58.0 | | 67.0 | 70 |
| 70 | 67.5 | 65.0 | 62.5 | 60 | 57.0 | 56.0 | 58.0 | 64.0 | 70 |
| 67.5 | 65.0 | 62.5 | 60 | 58.0 | 56.0 | 54.0 | 52 | 61.0 | 70 |

Fig. 4-23

| 90 2 | 90 1 | 90 | 80.0 | 70 | 69.8 | 69.5 | 76 | 69.9 | 70 |
|---|---|---|---|---|---|---|---|---|---|
| 90 2 | 90 1 | 90 | 80.0 | 70 | 69.7 | 69.2 | 69.5 | 69.8 | 70 |
| 90 1 | 90 | 83.4 | 76.7 | 70 | 69.4 | 68.8 | 69.2 | 69.6 | 70 |
| 90 | 85.0 | 80.0 | 75.0 | 70 | 68.8 | 68.2 | 68.8 | 69.4 | 70 |
| 87.5 | 82.0 | 78.0 | 72.5 | 70 | 67.5 | 67.3 | | 69.6 | 70 |
| 85.0 | 78.0 | 74.0 | 70 | 67.5 | 65.0 | 66.0 | | 69.2 | 70 |
| 80.0 | 74.0 | 70 | 67.5 | 65.0 | 62.5 | 61.7 | | 68.5 | 70 |
| 75.0 | 70 | 67.5 | 65.0 | 62.5 | 60 | 58.0 | | 67.0 | 70 |
| 70 | 67.5 | 65.0 | 62.5 | 60 | 57.0 | 56.0 | 58.0 | 64.0 | 70 |
| 67.5 | 65.0 | 62.5 | 60 | 58.0 | 56.0 | 54.0 | 52 | 61.0 | 70 |

Fig. 4-24

| 90 2 | 90 1 | 90 | 80.0 | 70 | 69.8 | 69.5 | 76 | 69.9 | 70 |
|---|---|---|---|---|---|---|---|---|---|
| 90 2 | 90 1 | 90 | 80.0 | 70 | 69.7 | 69.2 | 69.5 | 69.8 | 70 |
| 90 1 | 90 | 83.4 | 76.7 | 70 | 69.4 | 68.8 | 69.2 | 69.6 | 70 |
| 90 | 85.0 | 80.0 | 75.0 | 70 | 68.8 | 68.2 | 68.8 | 69.4 | 70 |
| 87.5 | 82.0 | 78.0 | 72.5 | 70 | 67.5 | 67.3 | 67.3 | 69.6 | 70 |
| 85.0 | 78.0 | 74.0 | 70 | 67.5 | 65.0 | 66.0 | 66.0 | 69.2 | 70 |
| 80.0 | 74.0 | 70 | 67.5 | 65.0 | 62.5 | 61.7 | 61.7 | 68.5 | 70 |
| 75.0 | 70 | 67.5 | 65.0 | 62.5 | 60 | 58.0 | 58.0 | 67.0 | 70 |
| 70 | 67.5 | 65.0 | 62.5 | 60 | 57.0 | 56.0 | 58.0 | 64.0 | 70 |
| 67.5 | 65.0 | 62.5 | 60 | 58.0 | 56.0 | 54.0 | 52 | 61.0 | 70 |

Fig. 5

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5798768 A

**In der Beschreibung aufgeführte Nicht-Patentliteratur**

- **BARTELME.** Geoinformatik. Springer, 1995, 117 ff